(19) **Europäisches Patentamt**

**European Patent Office**

**Office européen des brevets**

(11) **EP 0 861 300 B1**

(12) **EUROPEAN PATENT SPECIFICATION**

(45) Date of publication and mention
of the grant of the patent:
**29.11.2000 Bulletin 2000/48**

(51) Int Cl.⁷: **C09C 1/56**

(86) International application number:
**PCT/NO96/00167**

(21) Application number: **96923105.9**

(22) Date of filing: **05.07.1996**

(87) International publication number:
**WO 97/03133 (30.01.1997 Gazette 1997/06)**

(54) **HEAT TREATMENT OF CARBON MATERIALS**

WÄRMEBEHANDLUNG VON KOHLENSTOFFMATERIALIEN

TRAITEMENT THERMIQUE DE MATIERES CARBONEES

(84) Designated Contracting States:
**AT BE CH DE DK ES FI FR GB GR IE IT LI LU MC
NL PT SE**

(30) Priority: **07.07.1995 NO 952725**

(43) Date of publication of application:
**02.09.1998 Bulletin 1998/36**

(73) Proprietors:
• **Erachem Europe sa**
**1050 Brussels (BE)**
• **Kvaerner Technology and Research Limited**
**London W14 8YW (GB)**

(72) Inventors:
• **LYNUM, Steinar**
**N-0284 Oslo (NO)**

• **HOX, Ketil**
**N-7021 Trondheim (NO)**
• **SMET, Richard**
**B-2630 Aartselaar (BE)**
• **HUGDAHL, Jan**
**N-7017 Trondheim (NO)**
• **PROBST, Nicolas**
**B-1050 Brussels (BE)**

(74) Representative:
**Baverstock, Michael George Douglas et al
BOULT WADE TENNANT,
Verulam Gardens
70 Gray's Inn Road
London WC1X 8BT (GB)**

(56) References cited:
**WO-A-94/17908**        **DD-A- 292 920**

## EP 0 861 300 B1

**Description**

The invention concerns a method for heat treatment of carbon materials and especially carbon black in a plasma process for increased order in the nanostructure, i.e. an increased degree of graphitization, in the carbon black particles. The process consists in an upgrading of commercial carbon qualities. The heat treatment is performed in a plasma zone where residence time and the power supplied are controlled to ensure that the carbon material does not sublimate, thereby preventing the carbon from evaporating and being transformed into a new product.

The microstructure in carbon black particles is composed of small crystallite areas in a turbostratic order, i.e. parallel layers rotated but not ordered around the c-axis. The graphitic layers are concentrically ordered towards the particle surface, i.e. parallel orientation, with an increasing degree of disorder in towards the centre of the particles.

The crystallite dimension is defined by Lc, La and d 002 respectively. Lc is the crystallite size in the c-direction, i.e. height, and is the average stacking height of graphitic layers. La is the size or spread of the layers and represents the average diameter of each layer. d 002 is the distance between the graphitic layers.

Crystallite dimensions measured by X-ray diffraction for carbon black produced by known conventional processes are specified in Table 1.

Structural properties of carbon black determined by X-ray diffraction (nm)

Table 1

| Quality | La | Lc | d 002 |
|---|---|---|---|
| Graphite as ref. | | | 0.335 |
| Thermal Black | 2.8 | 1.7 | 0.350 |
| Channel Black | 1.9 | 1.4 | 0.353 |
| Furnace Black | 2.0 | 1.7 | 0.355 |
| Acetylene Black | 2.7 | 2.6 | 0.343 |

It is known that heat treatment alters the degree of order in the nanostructure in the carbon black particles. The crystallite size increases through increased average diameter (La) of the graphitic layers and through increased average layer height (Lc). The distance between the graphitic layers (d 002) is reduced.

Heat treatment of carbon black conducted at temperatures just over 1000°C has an effect on nanostructure and morphology. Raising the temperature to 2700°C or higher has a powerful effect on the order of graphitic layers and the growth of crystallites reaches a level corresponding to the data for Acetylene Black.

Heat treatment methods are known which consist in heating in an induction furnace in an inert gas atmosphere to a temperature between 1100°C and 2400°C with a residence time from a few minutes to several hours.

In US 4 351 815 there is disclosed a method for heat treatment of carbon black in a furnace with two heat zones. In the first zone it is heated to a temperature between 565°C and 760°C in order to convert any oxygen present to carbon dioxides and in the second zone it is heated to a temperature between 1400°C and 2400°C. The heat treatment time can vary from 9 sec. to 10 minutes.

In DD 292 920 there is disclosed a method for producing superior carbon black from inferior carbon black in a plasma reactor. Enthalpy of at least 3 kWh/kg is induced into the raw material at a reaction time between 0.1 and 1 sec., thus causing the carbon to be completely or partially sublimated. It is present in the form of gaseous carbon, and the process therefore has to be characterized as a transformation of the raw material and not a heat treatment process.

In WO 94/17908 there is disclosed a method for transforming carbon materials such as carbon black and graphite with an unsatisfactory nanostructure in a plasma reactor. An energy of between 40 kW/h and 150 kW/h is supplied to the raw material with a residence time in the reaction chamber of between 2 and 10 sec. The process has to be characterized as a transformation of the raw material and not a heat treatment process.

The object of the present invention is to provide an improved method, which is heat efficient and easy to control, for heat treatment of carbon materials and especially all types of carbon black in order to obtain an increased order in the nanostructure. This order in the nanostructure can be determined by standard test methods such as microscoping and by X-ray diffraction.

A further object of the invention is upgrading of commercial carbon black qualities, and another object is upgrading of carbon materials of a non-graphitized type which, e.g., are used as electrode materials.

Yet a further object is to be able to use the invention in order to attain special qualities which have not been produced hitherto or which can be difficult to produce by known production processes without the use of expensive raw materials such as acetylene.

A further object of the invention is to provide a method which can treat large amounts of raw materials in a short time thus making the process economically viable.

The above objects are achieved with a method which is characterized by the features presented in the patent claims.

In the known conventional methods for heat treatment the residence time for the raw material in the furnace is from 10 sec. to several hours. Such processes cannot treat large volumes in a short time and are therefore not a profitable undertaking. The surprising discovery has been made that the heat treatment time for carbon particles such as carbon black can be drastically reduced. By means of heat treatment in a plasma process, i.e. in a plasma zone, the same order of the graphitic layers is achieved as during heating in a furnace.

In a plasma zone, however, an increased order in the nanostructure is already achieved after a residence time in the range of 0.1 sec. or shorter. It has been shown that even a residence time of 0.05 sec. or shorter is sufficient to achieve a satisfactory order in the nanostructure. Thus a profitable method is provided, since a large volume can be treated in a short time.

This kind of heat treatment can be performed in a plasma zone which is created in a plasma torch where an electric arc burns between electrodes, or in a plasma zone which is created by induction heating, e.g. high frequency heating of a gas.

Various carbon materials such as coal, coke, etc. can be heat treated, but first and foremost specific carbon black qualities in order to obtain a special quality. The carbon particles are fed into the plasma zone by means of a carrier gas. This carrier gas may also be the plasma gas.

An inert gas such as Ar or N2 can be used as the carrier or plasma gas. A reducing gas such as H2, or a process gas which can be a mixture of H2 + CH4 + CO + CO2 can also be used. A combination of these gases may also be employed.

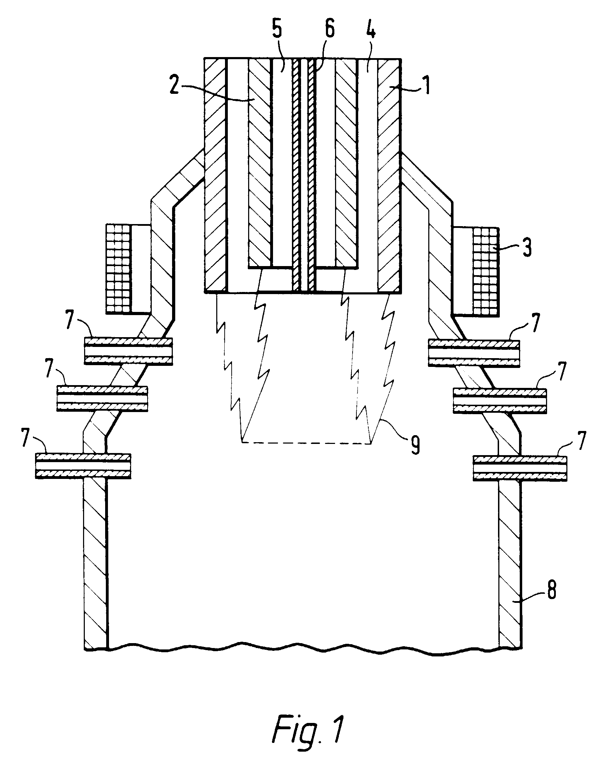

The invention will now be explained in more detail by means of an embodiment which is illustrated in a purely schematic form in fig. 1 which illustrates the principle of the design of a plasma torch with supply of a raw material to the plasma zone. The drawing illustrates the basic concept of a plasma torch, thus enabling a person skilled in the art to develop the technical solutions by the use of well-known means.

The plasma torch can be of conventional design. One design is described in Norwegian patent no. 174450 = PCT/NO92/00195 - WO 93/12633 from the same applicant. This plasma torch is intended for energy supply to chemical processes.

The plasma torch illustrated in figure 1 is designed with an external electrode 1 and a central electrode 2. The electrodes are tubular in shape and are placed coaxially inside each other. The electrodes are solid and made of a material with a high melting point with good electrical conductivity such as graphite. Cooled metal electrodes may also be used. The electrodes can be supplied with either direct current or alternating current. Around the electrodes in the area of operation of the electric arc there is placed a coil 3 which is supplied with direct current, thus forming an axial magnetic field.

The plasma gas can be supplied through the annular space 4 between the electrodes. The plasma gas can also be the carrier gas for the carbon particles.

The carbon particles are thereby passed through the electric arc, thus ensuring that they receive uniform exposure in the plasma zone 9. The residence time for the carbon black particles in the plasma zone 9 can be set on the basis of the rate of gas flow for the plasma gas.

The carrier gas containing the carbon particles may be supplied through a boring 5 in the central electrode 2 or through a separate supply pipe 6 which is located coaxially in the central electrode 2. A design of a supply pipe is described in Norwegian patent no. 174 180 = PCT/NO92/00198 - WO 93/12634 from the same applicant. This supply pipe is movable in the axial direction for positioning of the outlet in relation to the plasma zone 9. The residence time for the carbon black particles in the plasma zone 9 can thereby be set on the basis of the rate of gas flow for the carrier gas and by means of the position of the supply pipe in relation to the plasma electric arc.

As a third alternative the carrier gas containing the carbon particles may be supplied through one or more supply pipes 7 at and under the electric arc zone 9. Several supply pipes can be located along the circumference of the reactor chamber 8 at different levels at increasing distances from the plasma torch's electrodes 1,2. The residence time for the carbon black particles in the plasma zone 9 can thereby be set depending on which supply pipes are used.

High temperature plasma is formed by means of the gas which is heated by the electric arc which burns between the electrodes. In a plasma zone of this kind extremely high temperatures are reached, from 3000°C to 20 000°C, and it is in this zone that the heat treatment is performed.

The plasma torch is provided in connection with a reactor chamber 8 where the heat-treated material can be cooled, e.g. by the supply of cold plasma gas/carrier gas, which is thereby heated and can be recycled and used for energy supply. In addition to or as a part of the cooling gas special substances can be added in order to obtain certain chemical functional groups on the surface of the carbon particles. Such substances can be supplied in an area where the temperature has dropped to a specific level. Such substances may also be supplied in a succeeding chamber.

The rest of the equipment is of a known conventional type which includes cooler, as well as separating equipment which may consist of a cyclone or filter device where the carbon is separated. A design of such an arrangement is described in Norwegian patent no. 176 968 = PCT/NO93/00057 - WO 93/20153 from the same applicant.

The process is highly intensive and free of impurities. The process can be conducted as a continuous process or it can be employed intermittently. The process can be used in connection with an existing process, e.g. an oil furnace process or a plasma process. It can also be used integrated in a plasma process for the production of carbon black developed by the same applicant and described in Norwegian patent no. 175 718 = PCT/NO92/00196 - WO 93/12030 . In this process hydrocarbons are decomposed by means of the energy from a plasma torch into a carbon part and hydrogen which is fed into subsequent stages in a reactor chamber with temperature zones for regulation and control of the quality of the products obtained. In the reactor one or more additional plasma torches can be installed where a heat treatment process according to the invention can be performed on the created carbon black.

A gross enthalpy from 1 to 10 kWh/kg, preferably from 2 to 6 kWh/kg, is induced in the carbon black particles which have residence time in the plasma zone in the range of 0.07 sec to 0.01 sec. This gives the carbon black particles a temperature up to but not over the sublimation temperature for carbon which is 3700°C.

The gross enthalpy which is induced gives an increase in the system's total energy. Both heating of carbon black, plasma gas and carrier gas as well as heat loss are included in the gross balance. In order to prevent carbon black from evaporating sublimating, it must not be heated to temperatures over 3700°C.

The total energy supplied to a carbon black particle can be expressed by the equation:

$$\Delta G = \Delta H - T\Delta S$$

where

$\Delta G$ = Gibbs free energy = total supplied energy
$\Delta H$ = enthalpy = heat energy
$T$ = temperature in K
$\Delta S$ = entropy

Enthalpy data for carbon state that $\Delta H$ can be around a maximum of 2 kWh/kg in order to keep the temperature below 3700°C. The reason why the supply of more energy does not cause evaporation is that heat treatment provides a more ordered structure which in turn means that the entropy of the particles declines. Thus it will be possible for $\Delta H$ in the equation above to be below 2 kWh/kg even though the supplied energy ($\Delta G$) is greater than 2 kWh/kg.

The residence time should be understood as the time elapsed when the carbon black particles are exposed in the initial transfer stage for energy absorption in or at the plasma zone or the electric arc zone. The carbon particles have a high degree of emissivity, e>0.9, and in the course of a very short time which can be measured in milliseconds, they reach a temperature of over 3000°C due to heat radiation from the electric arc and possibly also from the electrodes. In the course of a very short time the carbon particles transfer some of their absorbed energy to the plasma gas and/or carrier gas by means of heat radiation and heat conduction. The plasma gas and the carrier gas have low emissivity, e<0.1, and thus the resulting temperature of the carbon black particles and the plasma gas/carrier gas reaches a level lower than 2000°C. The enthalpy induced and the residence time are adjusted to ensure that the carbon particles do not reach a temperature which is so high that they sublimate, that is the temperature must be kept below 3700°C.

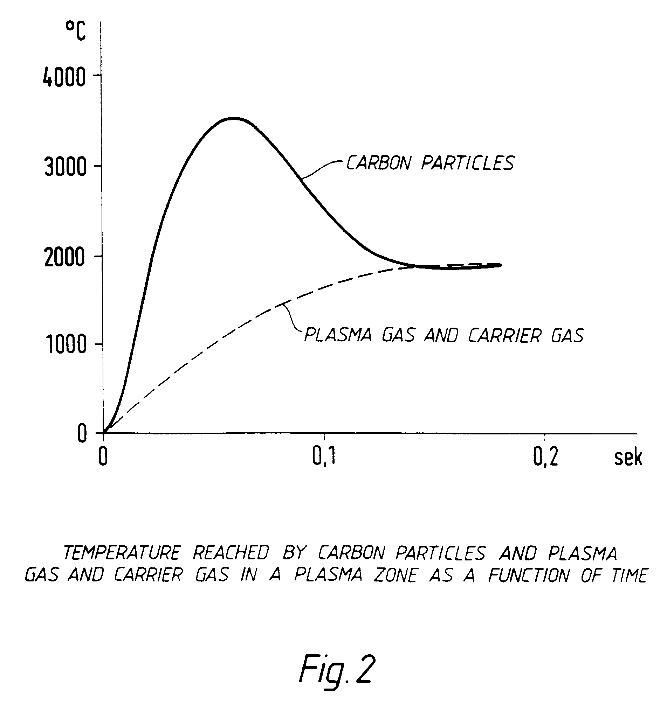

Figure 2 shows a diagram for the temperature reached by the carbon particles and the plasma gas/carrier gas in a plasma zone as a function of time. The solid line shows the temperature as a function of time for the carbon particles and the dotted line shows the temperature as a function of time for the plasma/carrier gas at a given gross enthalpy in the range of 5 kWh/kg carbon black.

Table 2 shows values for La, Lc and d 002 together with residence time and enthalpy for various qualities of carbon black before and after heat treatment with the above-mentioned parameters in a plasma zone and with the use of different types of plasma gas.

Table 2      Structural properties of carbon black determined by X-ray diffraction (Å)
(CNRS- Centre de Recherche Paul Pascal, 1994)

| Quality | As produced (Å) | | | After heat treatment (Å) | | | Plasma gas | Residence time (sec) | Gross enthalpy (kWh/ kg CB) |
|---|---|---|---|---|---|---|---|---|---|
| | $d_{002}$ | $L_a^2$ | $L_c$ | $d_{002}$ | $L_a^2$ | $L_c$ | | | |
| Sevacarb MT | 3,51 | 35 | 16 | 3,39 | 75 | 76 | $H_2$ | | |
| Furnex N-765 | 3,57 | 30 | 18 | 3,41 | 71 | 57 | --//-- | | |
| Statex N-550 | 3,55 | 32 | 17 | 3,42 | 77 | 71 | --//-- | 0,03 | 4 - 6 |
| Corax N-220 | 3,54 | 30 | 16 | 3,40 | 71 | 59 | --//-- | | |
| Condutex 975 | 3,56 | 39 | 20 | 3,41 | 76 | 60 | --//-- | | |
| Condutex SC | 3,56 | 33 | 16 | 3,45 | 67 | 41 | --//-- | | |
| Ensaco | 3,55 | 40 | 22 | 3,43 | 65 | 48 | Ar | 0,06 | 10 |
| Ensaco | 3,55 | 40 | 22 | 3,44 | 66 | 48 | Process gas | 0,02- 0,06 | 3 - 5 |
| Kværner LC | 3,48 | 60 | 40 | 3,43 | 89 | 134 | $H_2$ | 0,03 | 8 |
| Kværner HC | 3,46 | 52 | 44 | 3,41 | 102 | 127 | --//-- | 0,03 | 10 |

$L_a^2$ in accordance with Scherrer's formula

EP 0 861 300 B1

During the heat treatment chemical functional groups and impurities which are attached or bound to the surface of the carbon particles will be reduced or removed. The heat treatment leads to a dramatic reduction in the surface activity related to liberation of chemically bound hydrogen, from a level of 2500 ppm to approximately 100 ppm or lower.

In order to achieve special chemical functional groups on the surface of the carbon particles, special substances can be added to the plasma gas and/or carrier gas. These can be oxidizing media such as $CO_2$, CO, $O_2$, air and $H_2O$ or reducing media such as $H_2$, halogens, acids, etc.

Carbon black heat treated according to the method in the invention can be compared to carbon black heat treated for several hours in an induction furnace. Table 3 shows values for La, Lc and d 002 for one type of carbon black before and after heat treatment in an induction furnace and the same carbon black after heat treatment in the plasma process according to the invention.

Structural properties for carbon black determined by X-ray diffraction (nm)

Table 3

|  | La | Lc | d 002 |
|---|---|---|---|
| Untreated carbon black | 4.0 | 2.2 | 0.355 |
| Heat-treated in induction furnace | 7 | 5 | 0.341 |
| Heat-treated in plasma zone | 8.2 | 8 | 0.341 |

Process data for heat treatment in a plasma zone:

Plasma generator and reactor chamber as described.

| Feed material | Carbon black | 10 kg/h |
|---|---|---|
| Carrier gas | Ar | 3 Nm3/h |
| Plasma gas | Process gas: | 3 Nm3/h |
| Reactor pressure |  | 2 bar |
| Enthalpy induced |  | 2.9 - 4.8 kWh/kg |
| Residence time |  | 0.09 sec. |

The process gas consists of: 50% $H_2$, 1.5% $CH_4$, 48% CO and 1.5% $CO_2$.

The temperature reached by the carbon particles in the plasma zone is lower than 3700°C and the resulting temperature for carbon black and gases is approximately 2000°C.

Table 4 shows values for La, Lc and d 002 for a quality carbon black before and after heat treatment in a plasma zone according to the invention where two different plasma gases are employed.

Structural properties for carbon black determined by X-ray diffraction (nm)

Table 4

|  | La | Lc | d 002 | Plasma gas |
|---|---|---|---|---|
| Before heat treatment | 4 | 2.2 | 3.55 |  |
| After heat treatment | 6.5 | 4.8 | 3.43 | Ar |
| After heat treatment | 6.6 | 4.8 | 3.44 | Process gas |

The effect of the heat treatment will be to provide improved properties in the materials where carbon black is used as an additive. Reference is made in the following section to various products where special qualities of carbon black obtained by heat treatment according to the invention are employed.

Dry cell batteries:

In conventional dry cell batteries acetylene black or alternatively "special conductive black" qualities are employed. The latter are produced by the traditional "oil furnace process" followed by a known oxidizing or heat treatment stage. The use of special qualities gives an increase in the electrolyte capacity, better discharge characteristics etc.,

with the result that these qualities exhibit properties which are close to but not on the same level as acetylene black.

By means of the heat treatment according to the invention of traditionally produced carbon black qualities in a plasma zone a further degree of order is obtained in the nanostructure, thus enabling values to be achieved which are equal to or higher than those which are measured for acetylene black.

Electrically conductive carbon black:

A series of carbon black qualities such as "conductive", "super conductive" and "extra conductive" have been developed for specific applications. These provide electrically conductive and antistatic properties to polymer mixtures even when added in small amounts. These carbon black qualities give optimum conductivity as they possess high structure, high porosity, small particle size and a chemically pure surface. For these qualities a heat treatment according to the invention provides an even better degree of conductivity.

Traditional carbon black qualities which are employed, e.g., as additives in rubber can be upgraded in the same way to "conductive black". A heat treatment in a plasma zone according to the invention will clean the surface of oxides and impurities and optimize the internal conductivity in the carbon black particles by providing a greater degree of graphitization.

Non-graphitic carbon materials such as anthracite, petrol coke, tar coke and others can be treated according to the method according to the invention. Such carbon materials are, e.g., frequently used as electrodes and in fireproof production after a graphitization process involving heat treatment in a calcination furnace. A heat treatment according to the invention offers an alternative to the traditional calcination process and will bring the average distance between the graphitic layers, d 002, from a value of 0.344 nm down to a level of 0.335 nm as in graphite.

In fuel cell technology heat treatment of the electrode material will be an appropriate process. In phosphoric acid (PAFC) and solid polymer fuel cells (SPFC) graphite is used with a platinum catalyst as anode and cathode. In this context it is important that the electrodes have good electrical conductivity. By means of heat treatment of carbon materials according to the invention the increased degree of graphitization achieved through increased order in the nanostructure will entail an increase in the electrical conductivity of the material.

Thermally conductive carbon black:

Good thermal conductivity is desirable in polymer mixtures in order to avoid heat build-up and overheating and carbon black with good thermally conductive properties plays a substantial role in achieving this. It is known that the basic property of carbon black which contributes to this effect is a high degree of order, i.e. graphitization, with acetylene black as the best in this respect.

Heat treatment in a plasma zone according to the invention will provide this effect to all known traditional carbon black qualities.

**Claims**

1. A method for obtaining increased order in the nanostructure in carbon particles, especially carbon black, wherein the carbon particles are fed into a plasma zone by means of a carrier gas,
   that the carbon particles are after-treated with a treatment in a plasma zone (9), and wherein the gross enthalpy from 1 to 10 kWh/kg is induced in the carbon particles,
   characterized in that a residence time is employed in the range of 0,07 sec. to 0,01 sec. and that the ratio of residence time to enthalpy in the plasma zone (9) is adjusted in such a manner that the carbon particles are heated to a temperature which provides increased order in the nanostructure and which does not exceed 3700°C, thus preventing sublimation of the carbon particles.

2. A method according to claim 1,
   characterized in that an enthalpy from 2 to 6 kWh/kg is induced in the carbon material.

3. A method according to claims 1-2,
   characterized in that the residence time for the carbon particles in the plasma zone (9) is adjusted by controlling the rate of gas flow for plasma gas and/or carrier gas or by controlling the rate of gas flow for carrier gas and by the position of the supply pipe (6) in relation to the plasma zone or by the choice of supply pipes (7) which are used for introduction of the carbon particles and carrier gas.

4. A method according to claims 1-3,

characterized in that in order to obtain chemical functional groups on the surface of the carbon material, an oxidizing medium such as $CO_2$, CO, $H_2O$, air or $O_2$ or a reducing medium such as $H_2$ or halogens or acids are used as plasma and carrier gas or are added to plasma and carrier gas.

5. A method according to claims 1-4,
   characterized in that the after-treatment is conducted in connection with a production process.


**Patentansprüche**

1. Verfahren zur Erzielung einer erhöhten Ordnung in der Nanostruktur in Kohlenstoff-Teilchen, insbesondere Ruß, wobei die Kohlenstoff-Teilchen mit Hilfe eines Trägergases in eine Plasmazone geführt werden, damit die Kohlenstoff-Teilchen durch eine Behandlung in einer Plasmazone (9) nachbehandelt werden, und wobei die Verbrennungsenthalpie von 1 bis 10 kWh/kg in den Kohlenstoff-Teilchen hervorgerufen wird,
   dadurch **gekennzeichnet,** daß
   eine Verweilzeit im Bereich von 0,07 s bis 0,01 s angewendet wird und daß das Verhältnis Verweilzeit zu Enthalpie in der Plasmazone (9) so eingestellt wird, daß'die Kohlenstoff-Teilchen auf eine Temperatur erhitzt werden, die eine erhöhte Ordnung in der Nanostruktur liefert und die 3700°C nicht übersteigt, wodurch eine Sublimation der Kohlenstoff-Teilchen verhindert wird.

2. Verfahren nach Anspruch 1,
   dadurch **gekennzeichnet,** daß
   eine Enthalpie von 2 bis 6 kWh/kg in dem Kohlenstoff-Material hervorgerufen wird.

3. Verfahren nach Anspruch 1 oder Anspruch 2,
   dadurch **gekennzeichnet,** daß
   die Verweilzeit für die Kohlenstoff-Teilchen in der Plasmazone (9) durch Regulierung der Geschwindigkeit des Gasstroms für Plasmagas und/oder Trägergas oder durch Regulierung der Geschwindigkeit des Gasstroms für Trägergas und durch die Position der Zuführleitung (6) in bezug auf die Plasmazone oder durch die Wahl der Zuführleitungen (7), die zur Einleitung der Kohlenstoff-Teilchen und des Trägergases verwendet werden, eingestellt wird.

4. Verfahren nach einem der Ansprüche 1 bis 3,
   dadurch **gekennzeichnet,** daß
   zum Erhalt chemischer funktioneller Gruppen an der Oberfläche des Kohlenstoff-Materials ein oxidierendes Medium wie z.B. $CO_2$, CO, $H_2O$, Luft oder $O_2$ oder ein reduzierendes Medium wie z.B. $H_2$ oder Halogene oder Säuren als Plasma und Trägergas verwendet werden oder Plasma und Trägergas zugesetzt werden.

5. Verfahren nach einem der Ansprüche 1 bis 4,
   dadurch **gekennzeichnet,** daß
   die Nachbehandlung in Verbindung mit einem Herstellungsverfahren durchgeführt wird.


**Revendications**

1. Procédé pour obtenir un ordre accru dans la nanostructure dans des particules de carbone, en particulier, le noir de carbone, dans lequel les particules de carbone sont introduites dans une zone de plasma à l'aide d'un gaz porteur, que les particules de carbone sont traitées ultérieurement avec un traitement dans une zone de plasma (9), et dans laquelle l'enthalpie brute de 1 à 10 kWh/kg est induite dans les particules de carbone, caractérisé en ce qu'un temps de séjour est employée dans la gamme de 0,07 s à 0,01 s et que le rapport de temps de séjour à enthalpie dans la zone de plasma (9) est ajusté de manière telle que les particules de carbone sont chauffées à une température qui fournit un ordre accru dans la nanostructure et qui ne dépasse pas 3.700°C, empêchant ainsi la sublimation des particules de carbone.

2. Procédé selon la revendication 1, caractérisé en ce qu'une enthalpie de 2 à 6 kWh/kg est induite dans la matière carbonée.

3. Procédé selon les revendications 1 à 2, caractérisé en ce que le temps de séjour pour les particules de carbone dans la zone de plasma (9) est ajusté en régulant la vitesse d'écoulement gazeux pour le gaz de plasma et/ou le gaz porteur ou en régulant la vitesse d'écoulement gazeux pour le gaz porteur et par la position du tuyau d'alimentation (6) par rapport à la zone de plasma ou par le choix de tuyaux d'alimentation (7) que l'on utilise pour introduire les particules de carbone et le gaz porteur.

4.   Procédé selon les revendications 1 à 3, caractérisé en ce que dans le but d'obtenir des groupes fonctionnels chimiques sur la surface de la matière carbonée, un milieu oxydant tel que $CO_2$, CO, $H_2O$, l'air ou $O_2$ ou un milieu réducteur tel que $H_2$ ou halogènes ou acides est utilisé comme plasma et gaz porteur ou est ajouté au plasma et au gaz porteur.

5.   Procédé selon les revendications 1 à 4, caractérisé en ce que le traitement ultérieur est conduit en liaison avec un procédé de production.

Fig. 1

TEMPERATURE REACHED BY CARBON PARTICLES AND PLASMA
GAS AND CARRIER GAS IN A PLASMA ZONE AS A FUNCTION OF TIME

Fig. 2